# EUROPÄISCHE PATENTSCHRIFT

(11) **EP 4 190 673 B1**
(45) Veröffentlichungstag und Bekanntmachung des Hinweises auf die Patenterteilung: **12.06.2024**
(21) Anmeldenummer: 21212203.0
(22) Anmeldetag: 03.12.2021
(51) Int. Cl.: B62D 5/12, B62D 5/30, B62D 7/18

(54) **FAHRZEUGACHSE UND DEREN ANORDNUNG AN EINEM FAHRZEUG**
VEHICLE AXLE AND ITS ARRANGEMENT ON A VEHICLE
ESSIEU DE VÉHICULE ET SON AGENCEMENT SUR UN VÉHICULE

(43) Veröffentlichungstag der Anmeldung: 07.06.2023
(73) Patentinhaber: Bucher Municipal AG, 8166 Niederweningen (CH)
(72) Erfinder: Alexander, Zipes, 5408 Ennetbaden (CH); Markus, Nyffenegger, 5412 Gebenstorf (CH)
(74) Vertreter: Leinweber & Zimmermann

(56) Entgegenhaltungen:
- DE-A1-102012 018 993

## Beschreibung

Die Erfindung bezieht sich auf eine Fahrzeugachse mit zwei Achsschenkeln, von denen je einer an je einem von zwei in Bezug auf eine zur Spurweitenrichtung parallele Längsachse axial voneinander beabstandeten Anlenkbereichen um je eine Lenkachse verschwenkbar angelenkt ist; einer Hauptlenkaktuatoreinrichtung in Form einer druckmittelbetriebenen Kolben-Zylinder-Anordnung mit zwei sich parallel zur Längsachse erstreckenden Kolbenstangen, an deren freien Enden an je einer Anlenkstelle ein Ende eines Hauptkoppelgliedes angeordnet ist, dessen anderes Ende an je einer Anlenkstelle an je einem Achsschenkel angelenkt ist; und einer auf einen der Achsschenkel wirkenden Hilfslenkaktuatoreinrichtung, sowie auf deren Anordnung an einem Fahrzeug.

Bei einer derartigen bekannten Fahrzeugachse (DE 199 10 001 B4) ist die Kolben-Zylinder-Anordnung der Hauptlenkaktuatoreinrichtung als doppelt wirkender Druckmittelzylinder (Gleichlaufzylinder) ausgebildet und in der Fahrtrichtung vor der Achse angeordnet. Dagegen ist die Hilfslenkaktuatoreinrichtung hinter der Achse angeordnet und besteht aus einem linearen elektrischen Lenksteller, dessen eines Ende an einem Achskörper und dessen anderes Ende an einem Gelenkgehäuse eines der beiden Achsschenkel derart angelenkt ist, dass seine Linearbewegungsrichtung unter einem spitzen Winkel zu der Linearbewegungsrichtung des doppelt wirkenden Druckmittelzylinders der Hauptlenkaktuatoreinrichtung verläuft.

Für Kommunalfahrzeuge geeignete Fahrzeugachsen müssen für den Einsatz im städtischen Bereich besonders schmal ausgeführt werden. Weiterhin wird ein kurzer Radstand angestrebt, um kleine Wenderadien sicherzustellen. Ferner soll durch Überhang bedingtes Ausschwenken des Fahrzeughecks minimiert werden. Folglich befindet sich die Fahrerkabine konstruktionsbedingt vor der Vorderachse, was eine mechanische Verbindung von der Lenksäule zu den Lenkachsen erschwert. Herkömmlich stehen hierfür vor allem mechanische Lenkgetriebe oder hydraulische Lenksysteme zur Verfügung. Derartige Lenkgetriebe sind groß, teuer und schwergängig, was das Lenken dieser Fahrzeuge sehr erschwert und den Fahrzeugführer ermüdet. Hingegen sind einkreisige hydraulische Lenkungen relativ günstig, erlauben einen flexiblen Einbau und bieten dem Fahrzeugführer einen hohen Lenckomfort. Wegen der fehlenden Ausfallsicherheit einkreisiger hydraulischer Lenksysteme sind diese nur bis zu einer maximalen Einsatzgeschwindigkeit von 50 km/h zulassungsfähig.

Zur Erreichung einer Ausfallsicherheit einer Lenkanlage für landwirtschaftliche und kommunale Fahrzeuge sind im Stand der Technik zwei Ansätze vorhanden.

Im ersten Ansatz wird das hydraulische Lenksystem zusätzlich mit einem elektrischen oder pneumatischen Lenksteller ausgestattet, welcher im Fehlerfall die Lenkbarkeit des Fahrzeugs sicherstellen soll. Große Lenkwinkel bei Fahrzeugen für den kommunalen Einsatz und die damit notwendigen großen Verschiebewege der Stellglieder führen zu einem hohen Bauraumbedarf und sind mit der Installation des elektrischen Lenkstellers nur schwer umsetzbar. Der elektrische Lenksteller und seine Zuleitungen sind durch ihre exponierten Positionen nur unzureichend vor Beschädigung durch Hindernisse geschützt. Des Weiteren muss der elektrische Lenksteller so konstruiert sein, dass er neben den auftretenden Lenckräften auch noch sein Eigengewicht trägt, wobei die zur Einleitung der räumlich wirkenden großen Lenkkräfte notwendigen Gelenkelemente zwischen elektrischem Lenksteller und Achsschenkel bzw. Achskörper sehr groß ausfallen. Fehler bei der Ansteuerung des elektrischen Lenkstellers können des Weiteren zu einem unerwünschten Lenkvorgang oder einer Blockade der gesamten Lenkung führen. Es sind daher aufwendige Sicherheitsmaßnahmen und redundante Elektroniken mit entsprechend hohen Sicherheitsanforderungen notwendig. Hinzu kommen sensorische und regelungstechnische Aufwände, die den Gleichlauf der hydraulischen und elektrischen Lenksteller sicherstellen sollen, um zu vermeiden, dass es zu einer Verspannung und/oder Schädigung der Lenkanlage kommt.

Bekannte mehrkreisige hydraulische Systeme (EP 1 988 004 B1) mit zwei zueinander parallel angeordneten Zylindern, deren Kolbenstangen miteinander verbunden sind, ermöglichen zwar eine Verringerung des Bauraums in der Breitenrichtung, neigen aber wegen toleranzbedingter Verspannung zu einer Schädigung der Zylinderdichtungen, weshalb sie als nicht praktikabel und nicht den Ansprüchen an die Langlebigkeit einer Lenkanlage genügend angesehen werden. Des Weiteren zeigt die DE 10 2012 018993 A1 eine gattungsgemäße Fahrzeugachse.

Der Erfindung liegt die Aufgabe zugrunde, eine Fahrzeugachse der eingangs genannten Art zu schaffen, welche die Gefahr gegenseitiger Verspannungen der Hauptlenkaktuatoreinrichtung und der Hilfslenkaktuatoreinrichtung vermeidet.

Erfindungsgemäß wird diese Aufgabe dadurch gelöst, dass die Hilfslenkaktuatoreinrichtung durch eine Kolben-Zylinder-Anordnung mit einer sich parallel zur Längsachse erstreckenden Kolbenstange gebildet ist, an deren freiem Ende an einer Anlenkstelle ein Hilfskoppelglied angelenkt ist, dessen anderes Ende an dem Achsschenkel an einer Anlenkstelle angelenkt ist, die auf einer zu der Lenkachse parallelen und zu dieser beabstandeten Linie durch die Anlenkstelle des Hauptkoppelgliedes liegt.

Bei der Erfindung sind also die beiden Kolbenstangen der Kolben-Zylinder-Anordnung der Hauptlenkaktuatoreinrichtung mittels der insbesondere als Spurstangen ausgebildeten Hauptkoppelglieder über deren kolbenstangenseitige und achsschenkelseitige Anlenkstellen an den sich in der Spurweitenrichtung gegenüberliegenden Achsschenkeln angelenkt. Dagegen ist die Kolbenstange der Kolben-Zylinder-Anordnung der Hilfslenkaktuatoreinrichtung mittels des insbesondere als Spurstange ausgebildeten Hilfskoppelgliedes über dessen kolbenstangenseitigen Anlenkpunkt und dessen achsschenkelseitigen Anlenkpunkt nur mit einem der Achsschenkel verbunden. Hierdurch wird eine optimierte Kraftführung sowohl im regulären Betrieb als auch im Fehlerfall gewährleistet, da es mit dieser Konfiguration auch ohne die Einhaltung enger Toleranzen für die parallele Positionierung der Kolbenstangen der Kolben-Zylinder-Anordnungen der Hauptlenkaktuatoreinrichtung und der Hilfslenkaktuatoreinrichtung zu keiner Verspannung zwischen den Zylinderanordnungen kommt.

Durch die parallele Ausrichtung der Kolben-Zylinder-Anordnungen parallel zur Längsachse kann der volle Hub der Zylinder ausgenutzt werden, wodurch bei der Erfindung ein maximaler Lenkwinkel erreicht wird.

Die Erfindung ermöglicht die Nutzung von zwei parallelen Lenkkreisen für die Hauptlenkaktuatoreinrichtung und die Hilfslenkaktuatoreinrichtung, wodurch stets die Lenkbarkeit der Fahrzeugachse auch im Fehlerfall, beispielswiese einem Lenkkreisausfall durch einen geplatzten Schlauch, gewährleistet ist. Es bedarf keiner sofortigen Reaktion des Hydrauliksystems, da Haupt- und Hilfslenksystem stets im Eingriff sind. Die Erfindung stellt also eine ausfallsichere und gegenüber Fehlern, beispielsweise Schlauchplatzern, tolerante Lösung dar, die zu jedem Zeitpunkt die Lenkbarkeit eines mit der erfindungsgemäßen Fahrzeugachse versehenen Fahrzeugs sicherstellt und auch bei Ausfall eines Lenkkreises keine Totzeit zwischen dem Eintreten des Fehlers und der Aktivierung des Notfallsystems aufweist.

Weiterhin ermöglicht die Erfindung eine platzsparende und geschützte Integration der Lenkanlage, welche die für Kommunal- und Landtechnik erwünschten großen Lenkwinkel gewährleisten kann. Gleichzeitig ist auch eine hohe Flexibilität gewährleistet, indem die Integration der Lenkanlage sowohl für links- als auch rechtsgelenkte Fahrzeuge begünstigt ist.

Weiter ermöglicht die Erfindung Vereinfachungen hinsichtlich der hydraulischen Komplexität des Systems und damit einhergehend Einsparungen direkter Kosten, beispielsweise Materialkosten, und indirekter Kosten, beispielsweise für Montage und Kalibration.

Es ergeben sich auch zahlreiche Verbesserungen beim Systemverhalten während eines Fehlerfalls, beispielsweise durch Ausfall eines hydraulischen Kreislaufs, indem die Lenkbarkeit des Fahrzeugs gewährleistet bleibt, ohne dass eine unmittelbare Reaktion des Systems notwendig ist.

Die erfindungsgemäßen Hauptlenkaktuator- und Hilfslenkaktuatoreinrichtungen vermeiden unerwünschte gegenseitige Beeinflussungen, insbesondere Blockaden oder unerwünschte Lenkbewegungen durch das Blockieren oder die unbeabsichtigte Ansteuerung eines der Systeme.

Bevorzugt ist die Kolben-Zylinder-Anordnung der Hauptlenkaktuatoreinrichtung als Gleichlaufzylinder ausgebildet, bei dem die beiden Kolbenstangen beidseits seines Kolbens angeordnet sind. Dies ermöglicht eine Reduzierung der Breite der Lenkanlage und deren platzsparenden und geschützten Einbau. In dieser Hinsicht ist es ferner zweckmäßig, dass die Kolben-Zylinder-Anordnungen der Hauptlenkaktuatoreinrichtung und der Hilfslenkaktuatoreinrichtung in Bezug auf die Richtungen der Längsachsen übereinander angeordnet sind.

Im Rahmen der Erfindung ist insbesondere vorgesehen, dass die Anlenkbereiche der Achsschenkel an axialen Endbereichen eines starren Achskörpers ausgebildet sind.

In baulich zweckmäßiger Weise sind die Kolben-Zylinder-Anordnungen der Hauptlenkaktuatoreinrichtung und der Hilfslenkaktuatoreinrichtung an dem Achskörper befestigt.

Eine vorteilhafte Ausführungsform der Erfindung besteht darin, dass die Kolben-Zylinder-Anordnungen der Hauptlenkaktuatoreinrichtung und der Hilfslenkaktuatoreinrichtung die gleiche Bauform aufweisen. Die Nutzung von identischen Kolben-Zylinder-Anordnungen für das Haupt- und Hilfslenksystem führt zu reduzierten Kosten aufgrund höherer Stückzahlen und geringerer Teilevielfalt sowie zu einer geringeren Systemkomplexität.

Vorzugsweise ist das Druckmittel für den Betrieb der Kolben-Zylinder-Anordnungen eine Hydraulikflüssigkeit.

Im Rahmen der Erfindung ist außerdem vorgesehen, dass der Zylinder der Hauptlenkaktuatoreinrichtung und/oder der Zylinder der Hilfslenkaktuatoreinrichtung an ein dessen Druckmittelbetrieb dienendes Lenkorbitrol angeschlossen ist. Insbesondere ist für die Hauptlenkaktuatoreinrichtung ein Hauptlenkorbitrol und für die Hilfslenkaktuatoreinrichtung ein Hilfslenkorbitrol vorgesehen. Diese Orbitrole sind mit dem Lenkrad eines mit der erfindungsgemäßen Fahrzeugachse ausgerüsteten Fahrzeugs verbunden. Sie setzen die Drehung des Lenkrades in eine lineare Bewegung der Kolbenstangen der Kolben-Zylinder-Anordnungen um, indem sie den jeweiligen Kolben mit einer entsprechenden Druckmittelmenge beaufschlagen. Aus Sicherheitsgründen, insbesondere Gründen der Ausfallsicherheit, muss das Hauptlenkorbitrol mechanisch formschlüssig mit dem Lenkrad bzw. der mechanischen Lenkvorrichtung verbunden sein, wogegen das Hilfslenkorbitrol auch kraftschlüssig, beispielsweise über einen Riemen, angebunden werden kann.

Die Lenkorbitrole sind gleichzeitig Ventilkombination und Notlaufhydraulikpumpe und können somit bei einer Unterbrechung der Druckmittelversorgung allein durch das Drehen des Lenkrades Hydraulikflüssigkeit zu den daran angeschlossenen Lenkzylindern fördern und dadurch die Lenkbarkeit des Fahrzeugs sicherstellen.

Nachstehend wird eine Ausführungsform der Erfindung unter Bezugnahme auf die Zeichnung näher erläutert. Es zeigen:
- Fig. 1: eine Seitenansicht eines Kommunalfahrzeugs,
- Fig. 2: eine perspektivische Ansicht einer in Fahrrichtung vorderen Fahrzeugachse des Fahrzeugs,
- Fig. 3: eine hintere Aufsicht auf die Fahrzeugachse
- Fig. 4: eine Aufsicht auf die dem Achskörper der Fahrzeugachse zugewandte Innenseite eines Achsschenkels, und
- Fig. 5: je eine perspektivische Ansicht des Achsschenkels in Richtung auf seine dem Achskörper zugewandte Innenseite und in Richtung auf seine dem Achskörper abgewandte Außenseite.

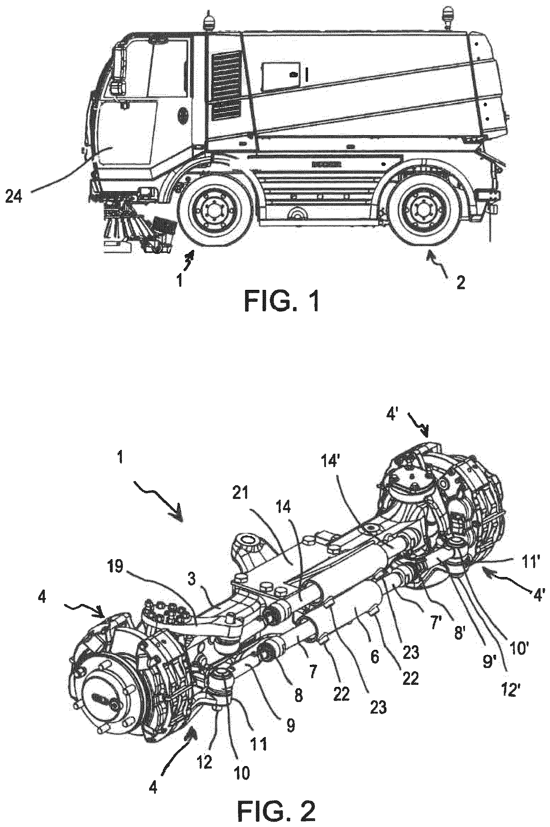

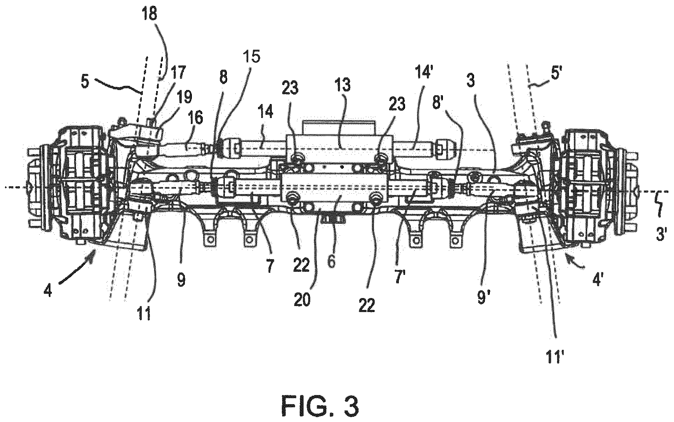

Ein in Fig. 1 dargestelltes Kommunalfahrzeug, das als Straßenkehrmaschine ausgebildet ist, weist eine in Bezug auf seine Hauptfahrtrichtung vordere Fahrzeugachse 1 und eine hintere Fahrzeugachse 2 auf. Die vordere Fahrzeugachse 1 ist in Fig. 2 in einer mit ihrer in die Hauptfahrtrichtung weisenden Vorderseite dem Betrachter zugewandten perspektivischen Ansicht dargestellt, wogegen Fig. 3 eine Aufsicht auf die Rückseite darstellt.

Wie aus den Fig. 2 und 3 ersichtlich ist, weist die Fahrzeugachse 1 einen starren Achskörper 3 auf, der sich mit seiner Längsachse 3' parallel zur Spurweitenrichtung erstreckt. An den beiden axialen Endbereichen des starren Achskörpers 3 ist jeweils ein Achsschenkel 4, 4' um je eine in Fig. 3 in gestrichelten Linien angedeutete Lenkachse 5, 5' verschwenkbar angelenkt. Die Richtungen dieser Lenkachsen sind gegenüber einer zur Längsachse 3' und zur Fahrzeuglängsachse orthogonalen Richtung geneigt, wobei die Neigung in der Richtung der Längsachse 3' bekanntlich als Spreizung und die Neigung in Richtung der Fahrzeuglängsachse bekanntlich als Nachlauf bezeichnet wird. Anders ausgedrückt, bezeichnet die Spreizung die Neigung der Lenkachse gegenüber einer Senkrechten auf der Fahrebene in der Projektion auf eine senkrecht zur Fahrtrichtung stehende Ebene. Der Nachlauf bezeichnet die Neigung der Lenkachse gegenüber einer Senkrechten zur Fahrebene in der Projektion auf eine parallel zur Fahrtrichtung und senkrecht zur Fahrebene stehende Ebene.

An der in der Hauptfahrtrichtung hinteren Seite des Achskörpers 3 ist ein hydraulischer Gleichlaufzylinder 6 befestigt, in dem ein Kolben parallel zur Längsachse 3' verschieblich gelagert ist. Der Antrieb für die Verschiebebewegung erfolgt durch Zuführung eines hydraulischen Druckmittels in die beidseits des Kolbens in dem Zylinder begrenzten Zylinderräume. Beidseits des Kolbens mit dem Kolben verbundene Kolbenstangen 7, 7', die sich parallel zur Längsachse 3' erstrecken, sind an ihren zu den Achsschenkeln 4, 4' weisenden freien Enden mit Anlenkstellen 8, 8' versehen, an deren jeder je ein in Form einer Spurstange ausgebildetes Hauptkoppelglied 9, 9' angelenkt ist.

Das jeweils andere Ende der Hauptkoppelglieder 9, 9' ist mittels einer Anlenkstelle 10 bzw. 10' an dem betreffenden Achsschenkel 4 bzw. 4' angelenkt. Hierfür weist jeder der beiden Achsschenkel 4, 4' einen Lenkhebel 11 bzw. 11' auf, der sich von einem um die Lenkachse 5 bzw. 5' zentrierten Befestigungsbereich 12 bzw. 12' am Achsschenkel 4 bzw. 4' aus quer zur Längsachse 3' erstreckt und an seinem dem Befestigungsbereich 12 bzw. 12' abgewandten freien Ende die Anlenkstelle 10 bzw. 10' für das Hauptkoppelglied 9 bzw. 9' trägt.

Ferner ist an der entgegen der Hauptfahrtrichtung zeigenden Rückseite des starren Achskörpers 3 ein mit dem Gleichlaufzylinder 6 baugleicher Gleichlaufzylinder 13 befestigt, dessen Kolben ebenfalls durch ein hydraulisches Druckmittel betrieben parallel zur Längsachse 3' verschiebbar ist. Die beiden Gleichlaufzylinder 6 und 13 sind in Bezug auf die Einbaulage der Fahrzeugachse 1 in einem Fahrzeug übereinander angeordnet, wobei der Gleichlaufzylinder 13 in Bezug auf die Fahrebene des Fahrzeugs oberhalb des Gleichlaufzylinders 6 positioniert ist.

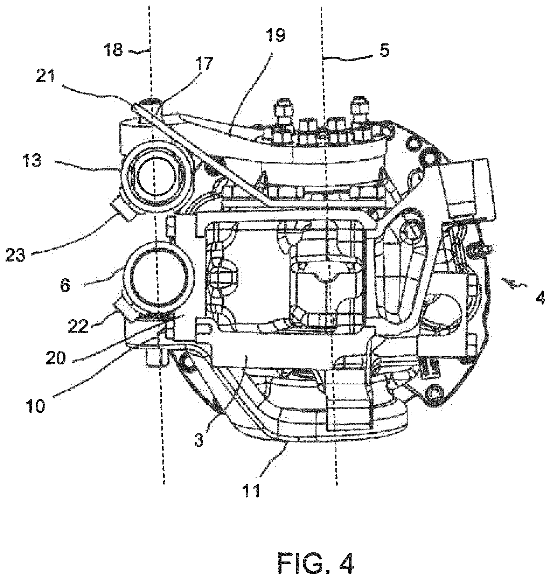

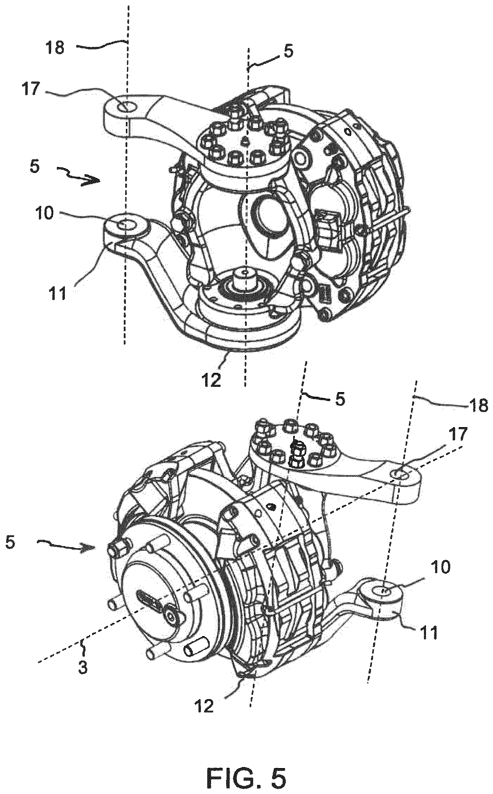

Am freien Ende der in Fig. 2 und 3 linken Kolbenstange 14 des Gleichlaufzylinders 13 ist an einer Anlenkstelle 15 ein Ende einer ein Hilfskoppelglied 16 bildenden Spurstange angelenkt. Das andere Ende des Hilfskoppelglieds 16 ist an einer Anlenkstelle 17 an dem in den Fig. 2 und 3 linken Achsschenkel 4 angelenkt. Diese Anlenkstelle 17 liegt auf einer in den Fig. 3 bis 5 gestrichelt dargestellten Linie 18, die in einem Abstand zur Lenkachse 5 parallel zu dieser verläuft. Diese Anlenkstelle 17 ist ähnlich wie die Anlenkstelle 10 an einem freien Endbereich eines sich quer zur Längsachse 3' erstreckenden Lenkhebels 19 angeordnet, der an seinem um die Lenkachse 5 zentrierten anderen Endbereich mit dem Achsschenkel 4 verbunden ist. Dagegen ist die andere Kolbenstange 14' des Gleichlaufzylinders 13 frei, so dass sie keine Kraft- oder Bewegungsübertragung auf den ihr gegenüberliegenden anderen Achsschenkel 4' bewirkt.

Wie insbesondere aus den Fig. 2 bis 4 ersichtlich ist, sind die Gleichlaufzylinder 6, 13 mit Befestigungsflanschen 20, 21 versehen, über die sie an dem starren Achskörper 3 mittels Befestigungsschrauben befestigt sind.

Weiterhin sind in den Fig. 2 bis 4 die Anschlüsse 22, 23 der Gleichlaufzylinder 6 bzw. 13 erkennbar, die dem Anschluss der Druckmittelleitungen für das hydraulische Betriebsdruckmittel dienen. Der Steuerung der Zufuhr und Abfuhr des Betriebsdruckmittels dienen Steuerventile und/oder Lenkorbitrole (nicht dargestellt).

Insbesondere ist aus den Fig. 2 und 3 erkennbar, dass bei einem Ausfall der Druckmittelversorgung des Gleichlaufzylinders 6 die Lenkbarkeit der beiden Achsschenkel 4, 4' durch den Gleichlaufzylinder 13 aufrechterhalten werden kann, weil Letzterer über seine Kolbenstange 14 und das Hilfskoppelglied 16 die Lenkbewegung auf den in den Fig. 2 und 3 linken Achsschenkel 4 bewirkt und von dort aus die Lenkbewegung für den rechten Achsschenkel 4' über das Hauptkoppelglied 9, die Kolbenstangen 7, 7' des Gleichlaufzylinders 6 und das Hauptkoppelglied 9' auf den rechten Achsschenkel 4' übertragen wird. Somit dient der Gleichlaufzylinder 6 als Hauptlenkaktuatoreinrichtung und der Gleichlaufzylinder 13 als Hilfslenkaktuatoreinrichtung für die Lenkung der Fahrzeugachse 1.

Bei dem in Fig. 1 dargestellten Kommunalfahrzeug ist zur Erreichung eines verhältnismäßig kurzen Radstands die Fahrerkabine 24 in der Hauptfahrtrichtung gesehen vor der vorderen Fahrzeugachse 1 angeordnet. In deren Einbaulage befinden sich die Gleichlaufzylinder 6, 13 in der Hauptfahrtrichtung gesehen hinten. Dies begünstigt die funktionelle Anbindung des in der Fahrerkabine 24 angeordneten Lenkrades an die Gleichlaufzylinder 6, 13.

### Verzeichnis der Bezugszeichen

- 1: vordere Fahrzeugachse
- 2: hintere Fahrzeugachse
- 3: starrer Achskörper
- 3': Längsachse
- 4, 4': Achsschenkel
- 5, 5': Lenkachse
- 6: Gleichlaufzylinder
- 7, 7': Kolbenstangen
- 8, 8': Anlenkstellen
- 9, 9': Hauptkoppelglied
- 10, 10': Anlenkstelle
- 11, 11': Lenkhebel
- 12, 12': Befestigungsbereich
- 13: Gleichlaufzylinder
- 14, 14': Kolbenstange
- 15: Anlenkstelle
- 16: Hilfskoppelglied
- 17: Anlenkstelle
- 18: gestrichelte Linie
- 19: Lenkhebel
- 20,21: Befestigungsflansche
- 22,23: Anschlüsse
- 24: Fahrerkabine

## Patentansprüche

1. Fahrzeugachse (1) mit
zwei Achsschenkeln (4, 4'), von denen je einer an je einem von zwei in Bezug auf eine zur Spurweitenrichtung parallele Längsachse (3') axial voneinander beabstandeten Anlenkbereichen um je eine Lenkachse (5, 5') verschwenkbar angelenkt ist;
einer Hauptlenkaktuatoreinrichtung in Form einer druckmittelbetriebenen Kolben-Zylinder-Anordnung (6) mit zwei sich parallel zur Längsachse (3') erstreckenden Kolbenstangen (7, 7'), an deren freien Enden an je einer Anlenkstelle (8, 8') ein Ende eines Hauptkoppelgliedes (9, 9') angeordnet ist, dessen anderes Ende an je einer Anlenkstelle (10, 10') an je einem Achsschenkel (4, 4') angelenkt ist; und
einer auf einen der Achsschenkel (4) wirkenden Hilfslenkaktuatoreinrichtung,
**dadurch gekennzeichnet, dass**
die Hilfslenkaktuatoreinrichtung durch eine Kolben-Zylinder-Anordnung (13) mit einer sich parallel zur Längsachse (3') erstreckenden Kolbenstange (14) gebildet ist, an deren freiem Ende an einer Anlenkstelle (15) ein Hilfskoppelglied (16) angelenkt ist, dessen anderes Ende an dem Achsschenkel (4) an einer Anlenkstelle (17) angelenkt ist, die auf einer zu der Lenkachse (5) parallelen und zu dieser beabstandeten Linie (18) durch die Anlenkstelle (10) des Hauptkoppelgliedes (9) liegt.

2. Fahrzeugachse (1) nach Anspruch 1, **dadurch gekennzeichnet, dass** die Kolben-Zylinder-Anordnung (6) der Hauptlenkaktuatoreinrichtung als Gleichlaufzylinder ausgebildet ist, bei dem die beiden Kolbenstangen (7, 7') beidseits seines Kolbens angeordnet sind.

3. Fahrzeugachse (1) nach Anspruch 1 oder 2, **dadurch gekennzeichnet, dass** die achsschenkelseitigen Anlenkstellen (10, 10') des Hauptkoppelgliedes (9, 9') und/oder des Hilfskoppelgliedes (16) an Lenkhebeln (11, 11', 19) der Achsschenkel (4, 4') angeordnet sind.

4. Fahrzeugachse (1) nach einem der vorhergehenden Ansprüche, **dadurch gekennzeichnet, dass** die Kolben-Zylinder-Anordnungen (6, 13) der Hauptlenkaktuatoreinrichtung und der Hilfslenkaktuatoreinrichtung in Bezug auf die Richtungen der Lenkachsen (5, 5') übereinander angeordnet sind.

5. Fahrzeugachse (1) nach einem der vorhergehenden Ansprüche, **dadurch gekennzeichnet, dass** die Kolben-Zylinder-Anordnungen (6, 13) der Hauptlenkaktuatoreinrichtung und der Hilfslenkaktuatoreinrichtung die gleiche Bauform aufweisen.

6. Fahrzeugachse (1) nach einem der vorhergehenden Ansprüche, **dadurch gekennzeichnet, dass** die Anlenkbereiche der Achsschenkel (4, 4') an axialen Endbereichen eines starren Achskörpers (3) ausgebildet sind.

7. Fahrzeugachse (1) nach Anspruch 6, **dadurch gekennzeichnet, dass** die Zylinder der Hauptlenkaktuatoreinrichtung und der Hilfslenkaktuatoreinrichtung an dem Achskörper (3) befestigt sind.

8. Fahrzeugachse (1) nach einem der vorhergehenden Ansprüche, **dadurch gekennzeichnet, dass** der Zylinder (6) der Hauptlenkaktuatoreinrichtung und/oder der Zylinder (13) der Hilfslenkaktuatoreinrichtung an ein dessen Druckmittelbetrieb dienendes Lenkorbitrol angeschlossen ist.

9. Anordnung einer Fahrzeugachse (1) nach einem der Ansprüche 1 bis 8 an einem Fahrzeug, **dadurch gekennzeichnet, dass** die Hauptlenkaktuatoreinrichtung und die Hilfslenkaktuatoreinrichtung an der gegen die Fahrtrichtung des Fahrzeugs weisenden Seite der Fahrzeugachse (1) angeordnet sind.

10. Anordnung nach Anspruch 9, **dadurch gekennzeichnet, dass** die Hilfslenkaktuatoreinrichtung oberhalb der Hauptlenkaktuatoreinrichtung angeordnet ist.

11. Anordnung nach Anspruch 9 oder 10, **dadurch gekennzeichnet, dass** das Fahrzeug ein Nutzfahrzeug, insbesondere ein Kommunalfahrzeug ist.

## Claims

1. A vehicle axle (1) comprising:
two steering knuckles (4, 4'), each respectively mounted on one of two linkage areas spaced axially from each other in respect of a longitudinal axis (3') running parallel to the axle track direction, each steering knuckle being pivotally mounted around a steering axle (5, 5');
a main steering actuating device in the form of a piston cylinder arrangement (6), operated by means of a pressurising medium, comprising two piston rods (7, 7') extending parallel to the longitudinal axis (3'), one end of a main coupling link (9, 9') being arranged on a linkage point (8, 8') on the free ends of each of said piston rods, and the other end of said main coupling link being mounted on a linkage point (10, 10') of a respective steering knuckle (4, 4'); and
an auxiliary steering actuating device acting on one of the steering knuckles (4),
**characterised in that**
the auxiliary actuating device is formed by a piston cylinder arrangement (13) comprising a piston rod (14) extending parallel to the longitudinal axis (3'), an auxiliary coupling link (16) being mounted on a linkage point (15) on the free end of said piston rod, and the other end of said auxiliary coupling link being mounted on a linkage point (17) on the steering knuckle (4), which linkage point sits on a line (18) which passes through the linkage point (10) of the main coupling link (9), extends parallel to the steering axle (5) and is at a distance from the same.

2. The vehicle axle (1) according to claim 1, **characterised in that** the piston cylinder arrangement (6) of the main steering actuating device is configured as a synchronous cylinder in which the two piston rods (7, 7') are arranged on both sides of the respective piston.

3. The vehicle axle (1) according to claim 1 or 2, **characterised in that** the linkage points (10, 10') on the steering knuckle side of the main coupling link (9, 9') and/or the auxiliary coupling link (16) are arranged on steering arms (11, 11', 19) of the steering knuckle (4, 4').

4. The vehicle axle (1) according to one of the preceding claims, **characterised in that** the piston cylinder arrangements (6, 13) of the main steering actuating device and auxiliary steering actuating device are arranged one on top of the other in respect of the directions of the steering axles (5, 5').

5. The vehicle axle (1) according to one of the preceding claims, **characterised in that** the piston cylinder arrangements (6, 13) of the main steering actuating device and auxiliary steering actuating device have the same configuration.

6. The vehicle axle (1) according to one of the preceding claims, **characterised in that** the linkage areas of the steering knuckles (4, 4') are configured on axial end areas of a rigid axle beam (3).

7. The vehicle axle (1) according to claim 6, **characterised in that** the cylinders of the main steering actuating device and auxiliary steering actuating device are attached to the axle beam (3).

8. The vehicle axle (1) according to one of the preceding claims, **characterised in that** the cylinder (6) of the main steering actuating device and/or the cylinder (13) of the auxiliary steering actuating device is/are connected to an orbitrol steering unit used for the operation of said cylinder(s) with a pressurising medium.

9. An arrangement of a vehicle axle (1) according to one of claims 1 to 8 on a vehicle, **characterised in that** the main steering actuating device and the auxiliary steering actuating device are arranged on the side of the vehicle axle (1) facing in the opposite direction to the direction of travel of the vehicle.

10. The arrangement according to claim 9, **characterised in that** the auxiliary steering actuating device is situated above the main steering actuating device.

11. The arrangement according to claim 9 or 10, **characterised in that** the vehicle is a utility vehicle, in particular a municipal vehicle.

## Revendications

1. Essieu de véhicule (1) comportant :
deux fusées d'essieu (4, 4'), chacune respectivement reliée, de manière pivotante autour d'un axe de direction (5, 5') respectif, à une zone d'articulation respective espacée axialement de l'autre eu égard à un axe longitudinal (3') parallèle au sens de la voie d'essieu ;
un dispositif d'actionnement de direction principal sous la forme d'un ensemble piston-cylindre (6) actionné par un fluide sous pression et doté de deux tiges de piston (7, 7') s'étendant parallèlement à l'axe longitudinal (3'), aux extrémités libres desquelles se trouve, en un point d'articulation (8, 8') respectif, une extrémité d'un organe d'accouplement principal (9, 9') dont l'autre extrémité est montée articulée sur un point d'articulation (10, 10') situé sur une fusée d'essieu (4, 4') respective, et
un dispositif d'actionnement de direction auxiliaire agissant sur l'une des fusées d'essieu (4) ;
**caractérisé en ce que**
le dispositif d'actionnement de direction auxiliaire est formé par un ensemble piston-cylindre (13) doté d'une tige de piston (14) s'étendant parallèlement à l'axe longitudinal (3'), à l'extrémité libre de laquelle est monté articulé, au niveau d'un point d'articulation (15), un organe d'accouplement auxiliaire (16) dont l'autre extrémité est montée articulée, sur la fusée d'essieu (4), au niveau d'un point d'articulation (17) qui se trouve sur une ligne (18) parallèle à l'axe de direction (5) et espacée de celui-ci et passant par le point d'articulation (10) de l'organe d'accouplement principal (9).

2. Essieu de véhicule (1) selon la revendication 1, **caractérisé en ce que** l'ensemble piston-cylindre (6) du dispositif d'actionnement de direction principal est conçu sous la forme d'un cylindre synchrone dans lequel les deux tiges de piston (7, 7') sont situées des deux côtés de son piston.

3. Essieu de véhicule (1) selon la revendication 1 ou 2, **caractérisé en ce que** les points d'articulation (10, 10') côté fusée d'essieu de l'organe d'accouplement principal (9, 9') et/ou de l'organe d'accouplement auxiliaire (16) sont situés au niveau de leviers de direction (11, 11', 19) des fusées d'essieu (4, 4').

4. Essieu de véhicule (1) selon l'une des revendications précédentes, **caractérisé en ce que** les ensembles piston-cylindre (6, 13) du dispositif d'actionnement de direction principal et du dispositif d'actionnement de direction auxiliaire sont situés l'un au-dessus de l'autre par rapport au sens des axes de direction (5, 5').

5. Essieu de véhicule (1) selon l'une des revendications précédentes, **caractérisé en ce que** les ensembles piston-cylindre (6, 13) du dispositif d'actionnement de direction principal et du dispositif d'actionnement de direction auxiliaire sont de même configuration.

6. Essieu de véhicule (1) selon l'une des revendications précédentes, **caractérisé en ce que** les zones d'articulation des fusées d'essieu (4, 4') sont formées sur des zones d'extrémité axiales d'un corps d'essieu (3) rigide.

7. Essieu de véhicule (1) selon la revendication 6, **caractérisé en ce que** les cylindres du dispositif d'actionnement de direction principal et du dispositif d'actionnement de direction auxiliaire sont fixés au corps d'essieu (3).

8. Essieu de véhicule (1) selon l'une des revendications précédentes, **caractérisé en ce que** le cylindre (6) du dispositif d'actionnement de direction principal et/ou le cylindre (13) du dispositif d'actionnement de direction auxiliaire sont raccordés à un orbitrol de direction servant à leur exploitation avec un fluide sous pression.

9. Agencement d'un essieu de véhicule (1) selon l'une des revendications 1 à 8 sur un véhicule, **caractérisé en ce que** le dispositif d'actionnement de direction principal et le dispositif d'actionnement de direction auxiliaire sont situés du côté de l'essieu de véhicule (1) tourné dans le sens contraire au sens du déplacement du véhicule.

10. Agencement selon la revendication 9, **caractérisé en ce que** le dispositif d'actionnement de direction auxiliaire est situé au-dessus du dispositif d'actionnement de direction principal.

11. Agencement selon la revendication 9 ou 10, **caractérisé en ce que** le véhicule est un véhicule utilitaire, notamment un véhicule municipal.
